# EUROPÄISCHE PATENTSCHRIFT

(11) **EP 4 244 977 B1**
(45) Veröffentlichungstag und Bekanntmachung des Hinweises auf die Patenterteilung: **12.08.2026**
(21) Anmeldenummer: 21787391.8
(22) Anmeldetag: 05.10.2021
(51) Int. Cl.: H02P 29/66, H02P 25/022, H02P 23/12, H02P 21/13

(54) **VORRICHTUNG UND VERFAHREN ZUM BESTIMMEN EINER TEMPERATUR EINES ROTORS**
APPARATUS AND METHOD FOR DETERMINING A TEMPERATURE OF A ROTOR
APPAREIL ET PROCÉDÉ DE DÉTERMINATION D'UNE TEMPÉRATURE D'UN ROTOR

(30) Priorität: 12.11.2020 DE 102020214228
(43) Veröffentlichungstag der Anmeldung: 20.09.2023
(73) Patentinhaber: Robert Bosch GmbH, 70442 Stuttgart (DE)
(72) Erfinder: HAHN, Christian, 90419 Nuernberg (DE); ZIESCHE, Sebastian, 71229 Leonberg (DE); HIRSCH, Michele, 73730 Esslingen (DE); BANGERTER, Michael, 71706 Markgroeningen (DE); HILALI, Wael, 70565 Stuttgart (DE); CHEN, Lei, 70437 Stuttgart (DE)
(86) Internationale Anmeldenummer: PCT/EP2021/077429
(87) Internationale Veröffentlichungsnummer: WO 2022/100932

(56) Entgegenhaltungen:
- EMEBET GEDLU GEBEYEHU ET AL: "Permanent Magnet Synchronous Machine Temperature Estimation using Low-Order Lumped-Parameter Thermal Network with Extended Iron Loss Model* * An extension of a full paper submitted to the International Conference on Power Electronics, Machines and Drives (PEMD) 2020", 21 January 2020 (2020-01-21), XP055872453, Retrieved from the Internet <URL:https://www.techrxiv.org/articles/preprint/Permanent_Magnet_Synchronous_Machine_Temperature_Estimation_using_Low-Order_Lumped-Parameter_Thermal_Network_with_Extended_Iron_Loss_Model/11671401/1> [retrieved on 20211213]
- WALLSCHEID OLIVER ET AL: "Fusion of direct and indirect temperature estimation techniques for permanent magnet synchronous motors", 2017 IEEE INTERNATIONAL ELECTRIC MACHINES AND DRIVES CONFERENCE (IEMDC), IEEE, 21 May 2017 (2017-05-21), pages 1 - 8, XP033137105, DOI: 10.1109/IEMDC.2017.8002038
- CHEN BICHENG ET AL: "A Comprehensive Thermal Model For System-Level Electric Drivetrain Simulation With Respect To Heat Exchange Between Components", 2020 19TH IEEE INTERSOCIETY CONFERENCE ON THERMAL AND THERMOMECHANICAL PHENOMENA IN ELECTRONIC SYSTEMS (ITHERM), IEEE, 21 July 2020 (2020-07-21), pages 558 - 567, XP033825356, DOI: 10.1109/ITHERM45881.2020.9190448

## Beschreibung

Die vorliegende Erfindung betrifft eine Vorrichtung zum Bestimmen einer Temperatur eines Rotors einer elektrischen Maschine. Weiter betrifft die Erfindung ein Verfahren zum Bestimmen einer Temperatur eines Rotors einer elektrischen Maschine. Insbesondere bezieht sich die Erfindung auf in Hybridfahrzeugen, Elektrofahrzeugen oder Brennstoffzellen-Fahrzeugen verwendete elektrische Maschinen.

### Stand der Technik

Für elektrische Maschinen im Automobilbereich ist die Bestimmung der Rotortemperatur von besonderer Bedeutung, um die Entmagnetisierung der Rotormagnete bei Überhitzung sowie daraus abgeleiteten Folgen, wie bspw. ein vorzeitiges Derating zu vermeiden. Allerdings gestaltet sich die Messung mittels Temperatursensoren zum Erfassen der Rotortemperatur schwierig. Daher wird die Rotortemperatur der E-Maschine meist mittels physikalischer Modellierung bestimmt. Ein beispielhaftes Verfahren zur Ermittlung der Rotortemperatur einer Synchronmaschine ist aus der EP 2 318 818 B1 bekannt. Weitere Vorrichtungen und Verfahren zum Bestimmen einer Temperatur eines Rotors sind aus folgenden Druckschriften bekannt:
- Emebet Gedlu Gebeyehu ET AL: "Permanent Magnet Synchranous Machine Temperature Estimation using Low-Order LumpedParameter Thermal Network with Extended Iran Lass Model* * An extension of a full paper submitted to the International Conference on Power Electranics, Machines and Drives (PEMD) 2020", 21. Januar 2020 (2020-01-21), XP055872453;
- WALLSCHEID OLIVER ET AL: "Fusion of direct and indirect temperature estimation techniques for permanent magnet synchranous motors", 2017 IEEE INTERNATIONAL ELECTRIC MACHINES AND DRIVES CONFERENCE (IEMDC), IEEE, 21. Mai 2017 (2017-05-21), Seiten 1-8, XP033137105;
- CHEN BICHENG ET AL: "A Comprehensive Thermal Model For System-Level Electric Drivetrain Simulation With Respect To Heat Exchange Between Components", 2020 19TH IEEE INTERSOCIETY CONFERENCE ON THERMAL AND THERMOMECHANICAL PHENOMENA IN ELECTRONIC SYSTEMS (ITHERM), IEEE, 21. Juli 2020 (2020-07-21), Seiten 558-567, XP033825356.

Aufgrund der begrenzten Speicher- und Rechenkapazitäten auf Steuergeräten, kommen einfache 1-Knoten thermodynamische Modelle für die Onboard-Anwendung zum Einsatz. Allerdings können diese thermischen Modelle typischerweise nicht alle thermischen Quellen ermitteln. Die modellierten Wärmeverlustterme müssen mit sehr aufwändigen Simulations- und/oder Prüfstandmessungen bestimmt bzw. kalibriert werden.

### Offenbarung der Erfindung

Die Erfindung stellt eine Vorrichtung zum Bestimmen einer Temperatur eines Rotors einer elektrischen Maschine sowie ein computerimplementiertes Verfahren zum Bestimmen einer Temperatur eines Rotors einer elektrischen Maschine mit den Merkmalen der unabhängigen Patentansprüche bereit.

Bevorzugte Ausführungsformen sind Gegenstand der jeweiligen Unteransprüche.

### Vorteile der Erfindung

Die Erfindung betrifft die Berechnung der Temperatur des Rotors anhand eines hybriden Modells (Gesamtmodell), welches ein physikalisches Modell sowie ein Künstliche-Intelligenz-Modell umfasst. Dadurch wird die Abschätzung der Temperatur des Rotors genauer, als dies rein auf einem physikalischen Modell basierend möglich wäre.

Der Verwendung des hybriden Modells liegt die Überlegung zugrunde, dass einige Beiträge zum Wärmeübergang am Rotor gut modellierbar sind und daher durch ein physikalisches Modell beschrieben werden können. Darüber hinaus gibt es jedoch Wärmeverluste, die nur schwer in ihrer Gesamtheit durch physikalische Modelle abbildbar sind. Bisher wurden die bekannten Wärmeverlustterme entweder gar nicht oder nur mit Hilfe einer sogenannten Powerlossmap (Lookup-Table) und einer Interpolationsmethode (z.B. über Gaußsche Prozesse) berechnet. Diese Umsetzung ist wegen des hochdimensionalen Inputs sehr ressourcenintensiv. Die Werte der Powerlossmap werden dabei durch aufwendige Simulationen und Prüfstandsmessungen errechnet bzw. kalibriert, wobei jedoch nicht alle Wärmeverlustterme abgedeckt werden. Des Weiteren führt eine Kalibrierung mit nur einem Muster dazu, dass Effekte durch Varianz in der Produktion nicht abgebildet werden.

Durch Verwendung des hybriden Modells werden die Wärmeverluste vorzugsweise nicht mehr durch Simulationen berechnet, sondern durch Daten am Prüfstand vermessen. Darüber hinaus wird bevorzugt keine Tabelle mehr zugrunde gelegt, sondern es wird mit den Prüfstandsdaten ein Künstliche-Intelligenz-Modell trainiert, dessen Ausgabe direkt der effektive Wärmeverlust ist. Insbesondere werden dadurch Wärmeverluste aufgrund von Fremdquellen berücksichtigt, was die Genauigkeit des Gesamtmodells erhöht und den Rechenaufwand des Steuergeräts reduziert.

Die Erfindung soll eine möglichst genaue maschinenspezifische Schätzung der Temperatur des Rotors einer elektrischen Maschine im laufenden Betrieb ermöglichen. Dadurch können im Betrieb Entmagnetisierung und Derating verhindert werden. Weiter kann der Ressourcenverbrauch für die Berechnung auf dem Steuergerät reduziert werden.

Gemäß einer bevorzugten Ausführungsform der Vorrichtung zum Bestimmen der Temperatur des Rotors der elektrischen Maschine umfasst der erste Beitrag zum Wärmeübergang am Rotor einen Wärmefluss von einem Stator der elektrischen Maschine zum Rotor. Der Wärmefluss vom Stator zum Rotor ist gut durch ein physikalisches Modell modellierbar.

Gemäß einer bevorzugten Ausführungsform der Vorrichtung zum Bestimmen der Temperatur des Rotors der elektrischen Maschine umfasst der erste Beitrag zum Wärmeübergang am Rotor einen Wärmefluss von einem Kühlmittel der elektrischen Maschine zum Rotor. Der Wärmefluss vom Kühlmittel zum Rotor ist ebenfalls gut durch ein physikalisches Modell modellierbar.

Gemäß einer bevorzugten Ausführungsform der Vorrichtung zum Bestimmen der Temperatur des Rotors der elektrischen Maschine umfasst das Künstliche-Intelligenz-Modell ein künstliches neuronales Netz.

Gemäß einer bevorzugten Ausführungsform der Vorrichtung zum Bestimmen der Temperatur des Rotors der elektrischen Maschine umfasst die mindestens eine Eingangsgröße eine aktuelle Temperatur des Stators und/oder eine aktuelle Temperatur des Kühlmittels. Die Recheneinrichtung berechnet den ersten Beitrag zum Wärmeübergang am Rotor anhand einer Temperaturdifferenz der aktuellen Temperatur des Stators zur zuletzt berechneten Temperatur des Rotors und/oder anhand einer Temperaturdifferenz der aktuellen Temperatur des Kühlmittels zur zuletzt berechneten Temperatur des Rotors.

Gemäß einer bevorzugten Ausführungsform der Vorrichtung zum Bestimmen der Temperatur des Rotors der elektrischen Maschine umfassen die Eingangsgrößen mindestens einen Strom der elektrischen Maschine, mindestens eine Spannung der elektrischen Maschine, eine DC-Link-Spannung einer mit der elektrischen Maschine gekoppelten Batterie, einen effektiven Phasenstrom der elektrischen Maschine, eine Pulsweitenmodulationsfrequenz, eine Drehzahl der elektrischen Maschine, ein Drehmoment der elektrischen Maschine, mindestens eine Modulationsgröße der elektrischen Maschine, eine Umgebungstemperatur der elektrischen Maschine, und/oder eine Getriebetemperatur eines mit der elektrischen Maschine gekoppelten Getriebes.

Durch das Trainieren des Künstliche-Intelligenz-Modells unter Berücksichtigung von einer Umgebungstemperatur der elektrischen Maschine und einer Getriebetemperatur eines mit der elektrischen Maschine gekoppelten Getriebes hat das Künstliche-Intelligenz-Modell einen großen Vorteil gegenüber einer rein physikalischen Modellierung, da die Wärmpfade zu der Umgebung und zu den umgebenden Komponenten in der E-Achse (und im Allgemein im Fahrzeug) nicht leicht physikalisch beschrieben und modelliert werden können. Mit dem hybriden Modell können aber alle thermische Quellen, das heißt auch Fremdquellen etwa am Getriebe, in die Rotorverluste projiziert werden, was eine genauere Bestimmung der Rotortemperatur unter realen Bedingungen ermöglicht.

Um diesen Umgebungseinfluss zu berücksichtigen, werden bevorzugt für das Training des Künstliche-Intelligenz-Modells Telemetrie-Messungen mit dem gesamten Einbau durchgeführt, d.h. Temperatur-Messungen vom Rotor als Teil von der kompletten E-Achse oder on-board-Messungen in mit einem Rotortemperatursensor ausgestatteten Fahrzeugen. On-board-Messungen ermöglichen eine realitätsnahe Modellierung der Wärmpfade und Verluste in der elektrischen Maschine, weil sie die realen Bedingungen widerspiegeln und die Alterungs- und Serienstreuungseinflüsse berücksichtigen. Dies ist ein weiterer Vorteil des hybriden Ansatzes gegenüber einer rein-physikalischen Modellierung.

Von Vorteil ist nicht nur, dass die Simulations- und Kalibrieraufwände reduziert werden und dass thermische Quellen in Betracht gezogen werden, die nicht leicht modellierbar sind. Ferner kann das Künstliche-Intelligenz-Modell auch mit den Einflussgrößen aus der Serienproduktion trainiert werden kann, um die induzierten Wärmeverluste genauer und maschinenspezifisch zu berechnen.

Gemäß einer bevorzugten Ausführungsform der Vorrichtung zum Bestimmen der Temperatur des Rotors der elektrischen Maschine plausibilisiert die Recheneinrichtung die Eingangsgrößen (zum Beispiel Temperatur von Stator oder Kühlmittel) und/oder den ersten Beitrag zum Wärmeübergang am Rotor und/oder den zweiten Beitrag zum Wärmeübergang am Rotor. Dadurch wird die Robustheit der Berechnung der Temperatur des Rotors erhöht.

Gemäß einer bevorzugten Ausführungsform der Vorrichtung zum Bestimmen der Temperatur des Rotors der elektrischen Maschine führt die Recheneinrichtung das Plausibilisieren unter Verwendung mindestens einer physikalischen Formel durch. Anhand der physikalischen Formel oder der physikalischen Formeln kann beispielsweise ein Grenzwert (Schwellenwert) für den Wärmeverlust berechnet werden. Liegt der berechnete zweite Beitrag zum Wärmeübergang außerhalb des anhand der physikalischen Formel bestimmten Grenzwerts, kann stattdessen der Grenzwert verwendet werden.

Gemäß einer bevorzugten Ausführungsform der Vorrichtung zum Bestimmen der Temperatur des Rotors der elektrischen Maschine führt die Recheneinrichtung das Plausibilisieren unter Verwendung eines Künstliche-Intelligenz-Verfahrens durch. Dadurch können Anomalien in den Eingangssignalen erkannt werden.

Gemäß einer bevorzugten Ausführungsform der Vorrichtung zum Bestimmen der Temperatur des Rotors der elektrischen Maschine führt die Recheneinrichtung das Plausibilisieren unter Verwendung von Sensorsignalen durch, welche von Sensoren empfangen werden, welche in der elektrischen Maschine verbaut sind. Falls erforderlich kann eine Nachjustierung der Modelle erfolgen. Eine solche Nachjustierung kann z.B. aufgrund der Serienstreuung und zusätzlicher Wärmepfade im Einbau notwendig werden.

Die elektrische Maschine kann beliebige Systeme antreiben, insbesondere jedoch batterie elektrisch- oder wasserstoffbetriebene Kraftfahrzeuge.

Gemäß einer weiteren Ausführungsform ist die Vorrichtung zum Bestimmen der Temperatur des Rotors der elektrischen Maschine an eine Cloud angebunden. Wird das KI-Modell mit den maschinenspezifischen Produktionsdaten trainiert (etwa einem Luftspalt oder einer Blechdicke), kann das hybride Modell bei einer Anbindung an die Cloud (und mit den Daten aus dem digitalen Zwillingen) eine sehr genaue Temperaturschätzung liefern, die die Effekte durch Varianz in der Produktion, Alterungseinflüsse, oder auch die Umgebungsbedingungen abbilden kann.

Gemäß einer weiteren Ausführungsform umfasst die Vorrichtung zum Bestimmen der Temperatur des Rotors Machine-Learning-Module zur Analyse, Plausibilisierung und Verarbeitung großer Datenmengen. Beispielsweise können die mittels der Schnittstelle empfangenen Eingangsgrößen Betriebsbedingungen der elektrischen Maschine, eine Umgebungstemperatur oder andere Wetterdaten umfassen.

Die Berechnung der Rotortemperatur kann auch in der Cloud ausgeführt werden. Insbesondere kann für die elektrische Maschine ein digitaler Zwilling erstellt werden, wobei die Berechnung der Rotortemperatur als Teil des digitalen Zwillings durchgeführt wird. Damit kann auch eine Plausibilisierung des On-Board-Modells durchgeführt werden.

### Kurze Beschreibung der Zeichnungen

Es zeigen:
- Figur 1: ein schematisches Blockdiagramm einer elektrischen Maschine sowie einer Vorrichtung zum Bestimmen einer Temperatur eines Rotors der elektrischen Maschine gemäß einer Ausführungsform der Erfindung;
- Figur 2: ein schematisches Blockdiagramm zur Erläuterung der Berechnung der Temperatur des Rotors der elektrischen Maschine;
- Figur 3: ein schematisches Blockdiagramm zur Erläuterung eines Training-Verfahrens des Künstliche-Intelligenz-Modells; und
- Figur 4: ein Flussdiagramm eines Verfahrens zum Bestimmen einer Temperatur eines Rotors einer elektrischen Maschine gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

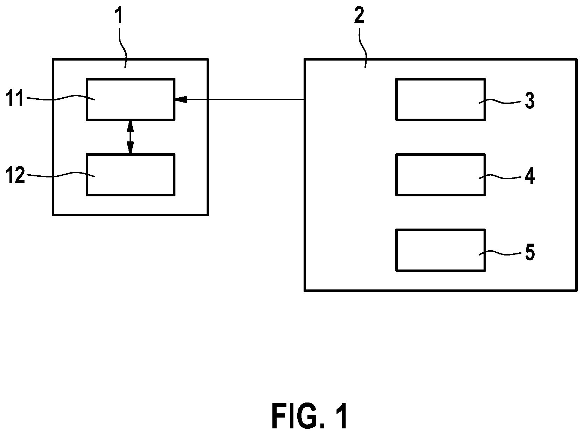

Figur 1 zeigt ein schematisches Blockdiagramm einer elektrischen Maschine 2 sowie einer Vorrichtung 1 zum Bestimmen einer Temperatur eines Rotors 3 der elektrischen Maschine 2. Die elektrische Maschine 2 umfasst weiter einen Stator 4 sowie ein Kühlmittelreservoir 5.

Die Vorrichtung umfasst eine Schnittstelle 11 und eine Recheneinrichtung 12. Die Schnittstelle 11 ist vorzugweise kabelgebunden, kann jedoch auch eine drahtlose Schnittstelle sein. Die Recheneinrichtung 12 umfasst Speicher zum Ablegen der empfangenen Daten sowie Rechenkomponenten wie etwa Mikroprozessoren, anwendungsspezifizierte Schaltungen (ASICs) oder dergleichen.

Über die Schnittstelle 11 werden Eingangsgrößen empfangen, welche vom Betrieb der elektrischen Maschine abhängig sind. Die Eingangsgrößen umfassen physikalische bzw. mechanische Größen (etwa Temperaturen, ein Drehmoment, eine Drehzahl und dergleichen) und/oder elektrische Größen (etwa Ströme und dergleichen).

Die Recheneinrichtung 12 berechnet anhand zumindest einer Eingangsgröße (etwa der Temperatur des Stators 4 und der Temperatur des Kühlmittels 5) mittels eines physikalischen Modells einen ersten Beitrag zum Wärmeübergang am Rotor 3. Weiter berechnet die Recheneinrichtung 12 anhand mindestens einer der Eingangsgrößen (etwa anhand von Strömen und einem Drehmoment) gleichzeitig oder anschließend mittels eines Künstliche-Intelligenz-Modells einen zweiten Beitrag zum Wärmeübergang am Rotor 3. Hierzu können dieselben oder zumindest teilweise verschiedene Eingangsgrößen berücksichtigt werden. Das künstliche Intelligenz-Modell kann ein neuronales Netz oder einen Gaußprozess-Regressor umfassen. Anhand des ersten Beitrags und anhand des zweiten Beitrags zum Wärmeübergang am Rotor berechnet die Recheneinrichtung die Temperatur des Rotors 3.

Die berechnete Temperatur kann über die Schnittstelle 11 ausgegeben werden. Ein Steuergerät kann beispielsweise die berechnete Temperatur des Rotors 3 empfangen und zum Steuern der elektrischen Maschine verwenden.

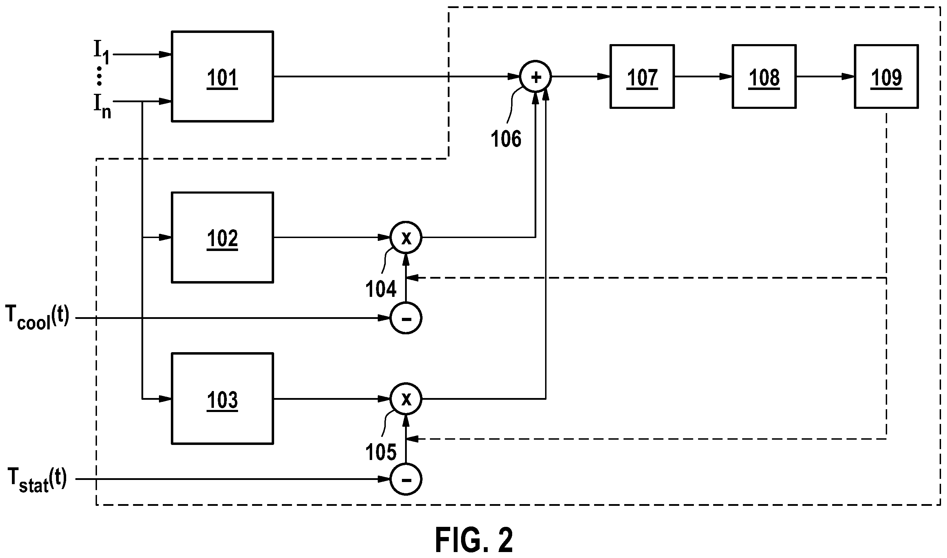

Figur 2 zeigt ein schematisches Blockdiagramm zur Erläuterung der Berechnung der Temperatur des Rotors 3 der elektrischen Maschine 2 mittels eines hybriden thermischen Modells. Es handelt sich hierbei um ein 1-Knoten Netzwerk-Modell.

Die Temperatur *T_{cool}*(*t*) des Kühlmittels 5 sowie die Temperatur *Tₛₜₐₜ*(*t*) am Stator 4 werden als Eingangsgröße empfangen. Weiter werden Eingangsgrößen *I₁, ... Iₙ* des Künstliche-Intelligenz-Modells 101 bereitgestellt, welche Ströme der elektrischen Maschine 2, Spannungen der elektrischen Maschine 2, eine DC-Link-Spannung einer mit der elektrischen Maschine 2 gekoppelten Batterie, einen effektiven Phasenstrom der elektrischen Maschine 2, eine Pulsweitenmodulationsfrequenz, eine Drehzahl der elektrischen Maschine 2, ein Drehmoment der elektrischen Maschine 2, Modulationsgrößen der elektrischen Maschine 2, eine Umgebungstemperatur der elektrischen Maschine 2 und/oder eine Getriebetemperatur eines mit der elektrischen Maschine 2 gekoppelten Getriebes umfassen können.

Eine Differenz der aktuellen Temperatur des Kühlmittels 5 und der zuletzt berechneten Temperatur des Rotors 3 wird von der Recheneinrichtung 12 berechnet: ${T}_{cool} \left(t\right) - {T}_{rot} \left(t-1\right) .$

Weiter berechnet die Recheneinrichtung 12 eine Differenz der aktuellen Temperatur des Stators 4 und der zuletzt berechneten Temperatur des Rotors 3: ${T}_{stat} \left(t\right) - {T}_{rot} \left(t-1\right) .$

Durch eine Multiplikation (104) mit einer in einer ersten Look-up-Tabelle 102 abgelegten spezifischen Wärmeleitfähigkeit des Kühlmittels 5 wird ein Wärmefluss vom Kühlmittel 5 zum Rotor 3 berechnet. Weiter wird durch Multiplikation (105) mit einer in einer zweiten Look-up-Tabelle 103 abgelegten spezifischen Wärmeleitfähigkeit des Stators 4 ein Wärmefluss vom Stator 4 zum Rotor 3 berechnet. Die beiden berechneten Wärmeflüsse stellen einen ersten Beitrag zum, insbesondere konvektiven, Wärmeübergang am Rotor 3 dar.

Das Künstliche-Intelligenz-Modell 101 berechnet anhand der Eingangsgrößen *I₁, ... Iₙ* einen zweiten Beitrag zum Wärmeübergang am Rotor 3. Der erste Beitrag zum Wärmeübergang am Rotor 3 wird mit dem zweiten Beitrag zum Wärmeübergang am Rotor 3 aufsummiert (106). Insbesondere die Wärmeverluste innerhalb des Rotors 3 stellen einen zweiten Beitrag zum Wärmeübergang am Rotor 3 dar.

Die Recheneinrichtung 12 teilt (107) die auf summierten Beiträge zum Wärmeübergang am Rotor 3 durch die spezifische Wärmekapazität *C_{th,rot}* des Rotors 3, wobei die spezifische Wärmekapazität *C_{th,rot}* des Rotors 3 das Verhältnis der zugeführten bzw. abgeführten Wärme und der damit bewirkten Temperaturänderung ist: ${C}_{th , rot} = \frac{dQ}{dT} .$

Diese Größe wird über die Zeit integriert (108), sodass die momentane Temperatur des Rotors 3 berechnet wird (109).

Die Berechnung des ersten Beitrags sowie die Berechnung des zweiten Beitrags können bevorzugt parallel ausgeführt werden.

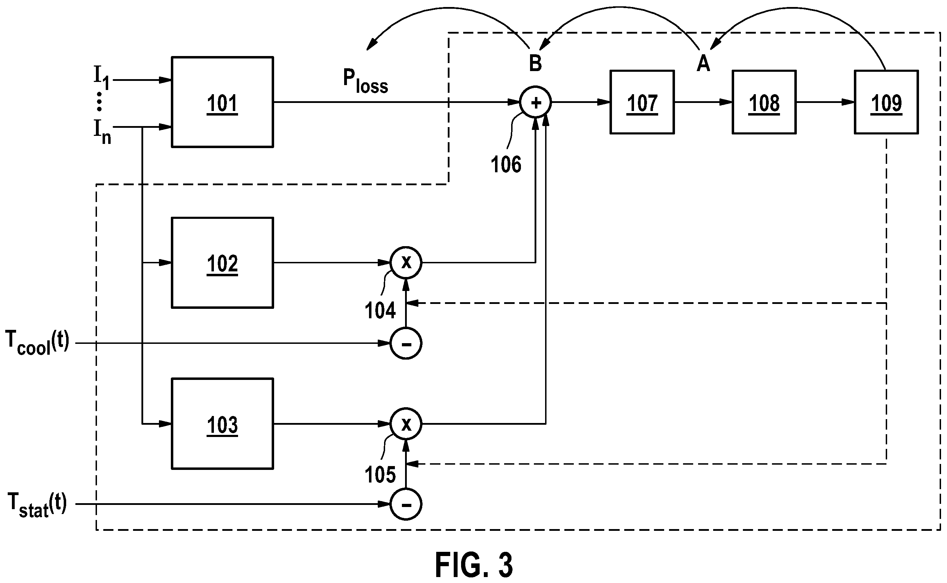

Figur 3 zeigt ein schematisches Blockdiagramm zur Erläuterung eines Training-Verfahrens des Künstliche-Intelligenz-Modells 101. Durch die Trennung in einen statischen Anteil (stationäres Verlustkennfeld) und einen dynamischen Teil wird das Training des Künstlichen-Intelligenz-Modells 101 erleichtert und dessen Größe reduziert. Für jeden Typ von elektrischer Maschine 2 wird bevorzugt ein eigenes Künstliche-Intelligenz-Modell trainiert. In der Applikationsphase wird das Künstliche-Intelligenz-Modell 101 mit Prüfstandmessungen trainiert, um Features (Label) zu berechnen. Die Prüfstandmessungen können Telemetrie-Messungen der Temperatur des Rotors 3 unter verschiedenen Last- und Umgebungsbedingungen sein.

Für das Training des Künstliche-Intelligenz-Modells 101 wird das benötigte Label aus den Telemetrie-Messungen der Temperatur des Rotors 3 (109) rückwärts bestimmt. Hierzu wird eine Differenz der aktuellen Temperatur des Rotors 3 und der vorherigen Temperatur des Rotors 3 berechnet (A): $Δ T = {T}_{rot} \left(t\right) - {T}_{rot} \left(t-1\right) .$

Weiter erfolgt eine Multiplikation mit der spezifischen Wärmekapazität *C_{th,rot}* des Rotors 3 (B): ${C}_{th , rot} ⋅ Δ T .$

Durch Herausrechnen des ersten Beitrags wird schließlich der Wärmeverlust *Pₗₒₛₛ* am Rotor als Label berechnet. Dieses Label wird zum Trainieren des Künstliche-Intelligenz-Modells 101 verwendet. Das trainierte Künstliche-Intelligenz-Modell 101 für die Wärmeverluste-Modellierung wird danach vorwärts als Baustein im gesamten hybriden Modell zur Rotortemperaturberechnung eingesetzt.

Die Robustheit des Künstliche-Intelligenz-Modells 101 kann optional durch das Training mit künstlich-verrauschten Daten gewährleistet werden. Die Datensätze werden dabei durch das systematische Addieren von Rauschen zu den Trainingssignalen angereichert. Diese Methode gewährleistet die Robustheit und eine gewisse Rauschtoleranz des Künstliche-Intelligenz-Modells 101.

Weiter können Plausibilisierungsfunktionen eingesetzt werden, um die Eingangsgrößen (z.B. die Temperatur von Stator 4 oder Kühlmittel 5) auf (Sensor-) Fehler zu überprüfen. Diese Plausibilisierung kann mit mindestens einer physikalischen Formel erfolgen, anhand welcher überprüft wird, ob die Eingangswerte innerhalb eines physikalischvaliden Bereiches liegen. Die Plausibilisierung kann auch anhand von Machine-Learning-Methoden erfolgen, welche Anomalien detektieren können.

Im Fall eines Sensorausfalls oder einer Fehlerdetektion wird das Künstliche-Intelligenz-Modell 101 auf den letzten plausiblen Wert des betroffenen Eingangssignals referenzieren und eine Worst-Case-Prädiktion der Temperatur des Rotors 3 liefern, um den Bauteilschutz zu gewährleisten.

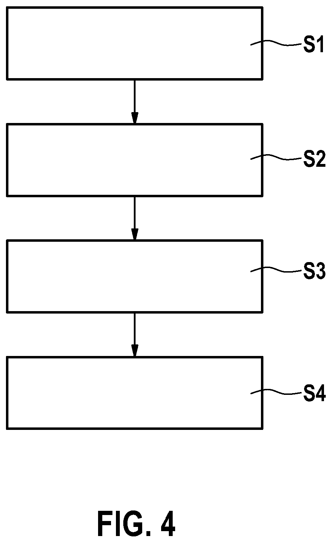

Figur 4 zeigt ein Flussdiagramm eines Verfahrens zum Bestimmen einer Temperatur eines Rotors 3 einer elektrischen Maschine 2.

In einem ersten Schritt S1 werden Eingangsgrößen empfangen, welche vom Betrieb der elektrischen Maschine 2 abhängig sind. Die Eingangsgrößen werden einer Recheneinrichtung 12 bereitgestellt.

In einem zweiten Schritt S2 berechnet die Recheneinrichtung 12 unter Verwendung eines physikalischen Modells einen ersten Beitrag zum Wärmeübergang am Rotor 3 anhand mindestens einer der Eingangsgrößen. Insbesondere kann die Recheneinrichtung 12 einen Wärmefluss von einem Stator 4 der elektrischen Maschine 2 zum Rotor 3 sowie einen Wärmefluss von einem Kühlmittel 5 der elektrischen Maschine 2 zum Rotor 3 berücksichtigen, um den ersten Beitrag zum Wärmeübergang am Rotor 3 zu berechnen.

In einem dritten Schritt S3 berechnet die Recheneinrichtung 12 einen zweiten Beitrag zum Wärmeübergang am Rotor 3 anhand mindestens einer der Eingangsgrößen und mittels eines Künstliche-Intelligenz-Modells 101. Das Künstliche-Intelligenz-Modell 101 kann hierzu in einem vorangehenden Trainingsverfahren anhand von Telemetrie-Daten trainiert worden sein, wie im Zusammenhang mit Figur 3 genauer erläutert.

In einem vierten Schritt S4 berechnet die Recheneinrichtung 11 schließlich die Temperatur des Rotors 3 anhand des ersten Beitrags und des zweiten Beitrags zum Wärmeübergang am Rotor 3. Hierzu kann die spezifische Wärmekapazität *C_{th,rot}* des Rotors 3 berücksichtigt werden, wie oben beschrieben.

Die berechnete Temperatur des Rotors 3 wird ausgegeben und etwa von einem Steuergerät beim Steuern elektrischen Maschine 3 berücksichtigt. Insbesondere kann die Temperatur des Rotors 3 bei einem Derating-Verfahren berücksichtigt werden.

## Patentansprüche

1. Vorrichtung (1) zum Bestimmen einer Temperatur eines Rotors (3) einer elektrischen Maschine (2), mit:
einer Schnittstelle (11), welche dazu ausgebildet ist, Eingangsgrößen zu empfangen, welche vom Betrieb der elektrischen Maschine (2) abhängig sind; und
einer Recheneinrichtung (12), welche dazu ausgebildet ist:
- anhand mindestens einer der Eingangsgrößen mittels eines physikalischen Modells einen ersten Beitrag zum Wärmeübergang am Rotor (3) zu berechnen,
- anhand mindestens einer der Eingangsgrößen mittels eines Künstliche-Intelligenz-Modells (101) einen zweiten Beitrag zum Wärmeübergang am Rotor (3) zu berechnen, und
- anhand des ersten Beitrags und des zweiten Beitrags zum Wärmeübergang am Rotor (3) die Temperatur des Rotors (3) zu berechnen,
wobei der erste Beitrag zum Wärmeübergang am Rotor (3) einen Wärmefluss von einem Stator (4) der elektrischen Maschine (2) zum Rotor (3) und/oder einen Wärmefluss von einem Kühlmittel (5) der elektrischen Maschine (2) zum Rotor (3) umfasst,
wobei die mindestens eine Eingangsgröße eine aktuelle Temperatur des Stators (4) und/oder eine aktuelle Temperatur des Kühlmittels (5) umfasst,
**dadurch gekennzeichnet, dass**
die Recheneinrichtung (12) dazu ausgebildet ist, den ersten Beitrag zum Wärmeübergang am Rotor (3) anhand einer Temperaturdifferenz der aktuellen Temperatur des Stators (4) zur zuletzt berechneten Temperatur des Rotors (3) und/oder anhand einer Temperaturdifferenz der aktuellen Temperatur des Kühlmittels (5) zur zuletzt berechneten Temperatur des Rotors (3) zu berechnen,
wobei für ein Training des Künstliche-Intelligenz-Modells (101) ein benötigtes Label aus Telemetrie-Messungen der Temperatur des Rotors (3) unter verschiedenen Last- und Umgebungsbedingungen rückwärts bestimmt wird,
wobei das Label in Abhängigkeit einer berechneten Differenz einer aktuellen Temperatur des Rotors (3) und einer vorherigen Temperatur des Rotors (3) berechnet wird,
und das Label zum Trainieren des Künstliche-Intelligenz-Modells (101) verwendet wird.

2. Vorrichtung (1) nach Anspruch 1, wobei die Eingangsgrößen mindestens einen Strom der elektrischen Maschine (2), mindestens eine Spannung der elektrischen Maschine, eine DC-Link-Spannung einer mit der elektrischen Maschine (2) gekoppelten Batterie, einen effektiven Phasenstrom der elektrischen Maschine (2), eine Pulsweitenmodulationsfrequenz, eine Drehzahl der elektrischen Maschine (2), ein Drehmoment der elektrischen Maschine (2), mindestens eine Modulationsgröße der elektrischen Maschine (2), eine Umgebungstemperatur der elektrischen Maschine (2), und/oder eine Getriebetemperatur eines mit der elektrischen Maschine (2) gekoppelten Getriebes umfassen.

3. Vorrichtung (1) nach einem der vorangehenden Ansprüche, wobei die Recheneinrichtung (12) weiter dazu ausgebildet ist, die Eingangsgrößen und/oder den ersten Beitrag zum Wärmeübergang am Rotor (3) und/oder den zweiten Beitrag zum Wärmeübergang am Rotor (3) zu plausibilisieren.

4. Vorrichtung (1) nach Anspruch 3, wobei die Recheneinrichtung (12) dazu ausgebildet ist, das Plausibilisieren unter Verwendung mindestens einer physikalischen Formel und/oder eines Künstliche-Intelligenz-Verfahrens durchzuführen.

5. Computerimplementiertes Verfahren zum Bestimmen einer Temperatur eines Rotors (3) einer elektrischen Maschine (2), mit den Schritten:
Bereitstellen (S1) von Eingangsgrößen, welche vom Betrieb der elektrischen Maschine (2) abhängig sind;
Berechnen (S2) eines ersten Beitrags zum Wärmeübergang am Rotor (3) anhand mindestens einer der Eingangsgrößen und mittels eines physikalischen Modells;
Berechnen (S3) eines zweiten Beitrags zum Wärmeübergang am Rotor (3) anhand mindestens einer der Eingangsgrößen und mittels eines Künstliche-Intelligenz-Modells (101); und
Berechnen (S4) der Temperatur des Rotors (3) anhand des ersten Beitrags und des zweiten Beitrags zum Wärmeübergang am Rotor (3),
wobei der erste Beitrag zum Wärmeübergang am Rotor (3) einen Wärmefluss von einem Stator (4) der elektrischen Maschine (2) zum Rotor (3) und/oder einen Wärmefluss von einem Kühlmittel (5) der elektrischen Maschine (2) zum Rotor (3) umfasst,
wobei die mindestens eine Eingangsgröße eine aktuelle Temperatur des Stators (4) und/oder eine aktuelle Temperatur des Kühlmittels (5) umfasst,
**dadurch gekennzeichnet, dass**
die Recheneinrichtung (12) den ersten Beitrag zum Wärmeübergang am Rotor (3) anhand einer Temperaturdifferenz der aktuellen Temperatur des Stators (4) zur zuletzt berechneten Temperatur des Rotors (3) und/oder anhand einer Temperaturdifferenz der aktuellen Temperatur des Kühlmittels (5) zur zuletzt berechneten Temperatur des Rotors (3) berechnet,
wobei für ein Training des Künstliche-Intelligenz-Modells (101) ein benötigtes Label aus Telemetrie-Messungen der Temperatur des Rotors (3) unter verschiedenen Last- und Umgebungsbedingungen rückwärts bestimmt wird,
wobei das Label in Abhängigkeit einer berechneten Differenz einer aktuellen Temperatur des Rotors (3) und einer vorherigen Temperatur des Rotors (3) berechnet wird,
und das Label zum Trainieren des Künstliche-Intelligenz-Modells (101) verwendet wird.

6. Verfahren nach Anspruch 5, wobei das Künstliche-Intelligenz-Modell (101) anhand von Prüfstanddaten der elektrischen Maschine (2) trainiert wird.

7. Computerprogrammprodukt mit ausführbarem Programmcode, dazu ausgebildet, beim Ausführen auf einer Recheneinrichtung (12) das Verfahren nach einem der Ansprüche 5 oder 6 auszuführen.

8. Nichtflüchtiges, computerlesbares Speichermedium mit ausführbarem Programmcode, dazu ausgebildet, beim Ausführen auf einer Recheneinrichtung (12) das Verfahren nach einem der Ansprüche 5 oder 6 auszuführen.

## Claims

1. Device (1) for determining a temperature of a rotor (3) of an electric machine (2), comprising:
an interface (11) which is designed to receive input variables which are dependent on the operation of the electric machine (2); and
a computing device (12) which is designed:
- to calculate a first contribution to the heat transfer at the rotor (3) on the basis of at least one of the input variables using a physical model,
- to calculate a second contribution to the heat transfer at the rotor (3) on the basis of at least one of the input variables using an artificial intelligence model (101), and
- to calculate the temperature of the rotor (3) on the basis of the first contribution and the second contribution to the heat transfer at the rotor (3),
wherein the first contribution to the heat transfer at the rotor (3) comprises a heat flow from a stator (4) of the electric machine (2) to the rotor (3) and/or a heat flow from a coolant (5) of the electric machine (2) to the rotor (3),
wherein the at least one input variable includes a current temperature of the stator (4) and/or a current temperature of the coolant (5),
**characterized in that**
the computing device (12) is designed to calculate the first contribution to the heat transfer at the rotor (3) on the basis of a temperature difference of the current temperature of the stator (4) from the most recently calculated temperature of the rotor (3) and/or on the basis of a temperature difference of the current temperature of the coolant (5) from the most recently calculated temperature of the rotor (3),
wherein a required label is determined backwards from telemetry measurements of the temperature of the rotor (3) under different load and environmental conditions for training the artificial intelligence model (101),
wherein the label is calculated as a function of a calculated difference between a current temperature of the rotor (3) and a previous temperature of the rotor (3),
and the label is used to train the artificial intelligence model (101).

2. Device (1) according to Claim 1, wherein the input variables include at least one current of the electric machine (2), at least one voltage of the electric machine, a DC link voltage of a battery coupled to the electric machine (2), an effective phase current of the electric machine (2), a pulse width modulation frequency, a speed of the electric machine (2), a torque of the electric machine (2), at least one modulation variable of the electric machine (2), an ambient temperature of the electric machine (2) and/or a gearbox temperature of a gearbox coupled to the electric machine (2).

3. Device (1) according to either of the preceding claims, wherein the computing device (12) is further designed to check the plausibility of the input variables and/or the first contribution to the heat transfer at the rotor (3) and/or the second contribution to the heat transfer at the rotor (3).

4. Device (1) according to Claim 3, wherein the computing device (12) is designed to carry out the check for plausibility using at least one physical formula and/or an artificial intelligence method.

5. Computer-implemented method for determining a temperature of a rotor (3) of an electric machine (2), comprising the steps of:
providing (S1) input variables which are dependent on the operation of the electric machine (2);
calculating (S2) a first contribution to the heat transfer at the rotor (3) on the basis of at least one of the input variables and using a physical model;
calculating (S3) a second contribution to the heat transfer at the rotor (3) on the basis of at least one of the input variables and using an artificial intelligence model (101); and
calculating (S4) the temperature of the rotor (3) on the basis of the first contribution and the second contribution to the heat transfer at the rotor (3),
wherein the first contribution to the heat transfer at the rotor (3) comprises a heat flow from a stator (4) of the electric machine (2) to the rotor (3) and/or a heat flow from a coolant (5) of the electric machine (2) to the rotor (3),
wherein the at least one input variable includes a current temperature of the stator (4) and/or a current temperature of the coolant (5),
**characterized in that**
the computing device (12) calculates the first contribution to the heat transfer at the rotor (3) on the basis of a temperature difference of the current temperature of the stator (4) from the most recently calculated temperature of the rotor (3) and/or on the basis of a temperature difference of the current temperature of the coolant (5) from the most recently calculated temperature of the rotor (3),
wherein a required label is determined backwards from telemetry measurements of the temperature of the rotor (3) under different load and environmental conditions for training the artificial intelligence model (101),
wherein the label is calculated as a function of a calculated difference between a current temperature of the rotor (3) and a previous temperature of the rotor (3),
and the label is used to train the artificial intelligence model (101).

6. Method according to Claim 5, wherein the artificial intelligence model (101) is trained on the basis of test bench data of the electric machine (2).

7. Computer program product having executable program code, designed to perform the method according to either of Claims 5 and 6 when executed on a computing device (12).

8. Non-volatile, computer-readable storage medium having executable program code, designed to perform the method according to either of Claims 5 and 6 when executed on a computing device (12).

## Revendications

1. Appareil (1) de détermination d'une température d'un rotor (3) d'une machine électrique (2), comprenant :
une interface (11), laquelle est configurée pour recevoir des variables d'entrée, lesquelles dépendent du fonctionnement de la machine électrique (2) ; et
un dispositif de calcul (12), lequel est configuré pour :
- calculer une première contribution au transfert thermique au niveau du rotor (3) à l'aide d'au moins l'une des variables d'entrée au moyen d'un modèle physique,
- calculer une deuxième contribution au transfert thermique au niveau du rotor (3) à l'aide d'au moins l'une des variables d'entrée au moyen d'un modèle d'intelligence artificielle (101), et
- calculer la température du rotor (3) à l'aide de la première contribution et de la deuxième contribution au transfert thermique au niveau du rotor (3),
la première contribution au transfert thermique au niveau du rotor (3) comprenant un flux de chaleur d'un stator (4) de la machine électrique (2) au rotor (3) et/ou un flux de chaleur d'un fluide de refroidissement (5) de la machine électrique (2) au rotor (3),
l'au moins une variable d'entrée comprenant une température actuelle du stator (4) et/ou une température actuelle du fluide de refroidissement (5),
**caractérisé en ce que**
le dispositif de calcul (12) est configuré pour calculer la première contribution au transfert thermique au niveau du rotor (3) à l'aide d'une différence de température entre la température actuelle du stator (4) et la dernière température calculée du rotor (3) et/ou à l'aide d'une différence de température entre la température actuelle du fluide de refroidissement (5) et la dernière température calculée du rotor (3),
une étiquette nécessaire pour un entraînement du modèle d'intelligence artificielle (101) étant déterminée a posteriori à partir de mesures télémétriques de la température du rotor (3) dans différentes conditions de charge et ambiantes,
l'étiquette étant calculée sur la base d'une différence calculée entre une température actuelle du rotor (3) et une température précédente du rotor (3),
et l'étiquette étant utilisée pour entraîner le modèle d'intelligence artificielle (101).

2. Appareil (1) selon la revendication 1, les variables d'entrée comprenant au moins un courant de la machine électrique (2), au moins une tension de la machine électrique, une tension de liaison en courant continu d'une batterie couplée à la machine électrique (2), un courant de phase effectif de la machine électrique (2), une fréquence de modulation de largeur d'impulsions, une vitesse de rotation de la machine électrique (2), un couple de la machine électrique (2), au moins une grandeur de modulation de la machine électrique (2), une température ambiante de la machine électrique (2) et/ou une température de transmission d'une transmission accouplée à la machine électrique (2).

3. Appareil (1) selon l'une des revendications précédentes, le dispositif de calcul (12) étant en outre configuré pour vérifier la plausibilité des variables d'entrée et/ou de la première contribution au transfert thermique au niveau du rotor (3) et/ou de la deuxième contribution au transfert thermique au niveau du rotor (3).

4. Appareil (1) selon la revendication 3, le dispositif de calcul (12) étant configuré pour effectuer le contrôle de plausibilité en utilisant au moins une formule physique et/ou un procédé d'intelligence artificielle.

5. Procédé mis en œuvre par ordinateur de détermination d'une température d'un rotor (3) d'une machine électrique (2), comprenant les étapes suivantes :
fourniture (S1) de variables d'entrée, lesquelles dépendent du fonctionnement de la machine électrique (2) ;
calcul (S2) d'une première contribution au transfert thermique au niveau du rotor (3) à l'aide d'au moins l'une des variables d'entrée et au moyen d'un modèle physique ;
calcul (S3) d'une deuxième contribution au transfert thermique au niveau du rotor (3) à l'aide d'au moins l'une des variables d'entrée et au moyen d'un modèle d'intelligence artificielle (101) ; et
calcul (S4) de la température du rotor (3) à l'aide de la première contribution et de la deuxième contribution au transfert thermique au niveau du rotor (3),
la première contribution au transfert thermique au niveau du rotor (3) comprenant un flux de chaleur d'un stator (4) de la machine électrique (2) au rotor (3) et/ou un flux de chaleur d'un fluide de refroidissement (5) de la machine électrique (2) au rotor (3),
l'au moins une variable d'entrée comprenant une température actuelle du stator (4) et/ou une température actuelle du fluide de refroidissement (5),
**caractérisé en ce que**
le dispositif de calcul (12) calcule la première contribution au transfert thermique au niveau du rotor (3) à l'aide d'une différence de température entre la température actuelle du stator (4) et la dernière température calculée du rotor (3) et/ou à l'aide d'une différence de température entre la température actuelle du fluide de refroidissement (5) et la dernière température calculée du rotor (3),
une étiquette nécessaire pour un entraînement du modèle d'intelligence artificielle (101) étant déterminée a posteriori à partir de mesures télémétriques de la température du rotor (3) dans différentes conditions de charge et ambiantes,
l'étiquette étant calculée sur la base d'une différence calculée entre une température actuelle du rotor (3) et une température précédente du rotor (3),
et l'étiquette étant utilisée pour entraîner le modèle d'intelligence artificielle (101).

6. Procédé selon la revendication 5, le modèle d'intelligence artificielle (101) étant entraîné à l'aide de données de banc d'essai de la machine électrique (2).

7. Produit de programme informatique comprenant un code de programme exécutable, configuré pour, lors de l'exécution sur un dispositif de calcul (12), mettre en œuvre le procédé selon l'une des revendications 5 ou 6.

8. Support de stockage non volatile, lisible par ordinateur, comprenant un code de programme exécutable, configuré pour, lors de l'exécution sur un dispositif de calcul (12), mettre en œuvre le procédé selon l'une des revendications 5 ou 6.
